# EUROPEAN PATENT SPECIFICATION

(11) **EP 1 717 781 B1**
(45) Date of publication and mention of the grant of the patent: **01.04.2015**
(21) Application number: 05719211.4
(22) Date of filing: 17.02.2005
(51) Int. Cl.: G09F 9/00, G06F 3/033, H04M 1/02

(54) **PROTECTION PANEL FOR ELECTRONIC APPARATUS DISPLAY WINDOW AND PRODUCTION METHOD FOR PROTECTION PANEL**
SCHUTZ-PANEL FÜR EIN ANZEIGEFENSTER EINER ELEKTRONISCHEN VORRICHTUNG UND HERSTELLUNGSVERFAHREN FÜR DAS SCHUTZ-PANEL
PANNEAU PROTECTEUR POUR FENÊTRE D'AFFICHEUR D'APPAREIL ÉLECTRONIQUE ET MÉTHODE DE PRODUCTION DE PANNEAU PROTECTEUR

(30) Priority: 20.02.2004 JP 2004045512
(43) Date of publication of application: 02.11.2006
(73) Proprietor: NISSHA PRINTING CO., LTD., Nakagyo-ku Kyoto-shi Kyoto 604-8551 (JP)
(72) Inventor: KUSUDA, Yasuji c/o NISSHA PRINTING CO., LTD., Kyoto 6048551 (JP); HASHIMOTO, Takao c/o NISSHA PRINTING CO., LTD., Kyoto 6048551 (JP); SHIMIZU, Jun c/o NISSHA PRINTING CO., LTD., Kyoto 6048551 (JP); YAMADA, Shinya c/o NISSHA PRINTING CO., LTD., Kyoto 6048551 (JP)
(74) Representative: Hoffmann Eitle
(86) International application number: PCT/JP2005/002409
(87) International publication number: WO 2005/081210

(56) References cited:
- DE-A1- 19 942 101
- GB-A- 2 370 368
- JP-A- 2001 290 005
- JP-A- 2002 156 912
- JP-A- 2002 522 966
- JP-A- 2003 255 847

## Description

### [TECHNICAL FIELD]

The present invention relates to a display window protection panel for an electronic apparatus fitted into a display window opening for protecting a portion of a display device, which is located under the display window opening in a casing of the electronic apparatus and exposed therefrom, and a manufacturing method of the protection panels.

### [BACKGROUND ART]

Generally, casings of electronic apparatuses such as mobile phones and smart phones have a flat shape constructed of a combination of a front casing and a back casing made of a synthetic resin. Specifically, the front casing is formed with an opening for a display window for disposing a liquid crystal display device, or the like, and to protect the surface of the display device provided below the display window, a protection panel is fixed by fusion bonding, or the like.

Previously, various ideas have been proposed for the protection panel. For example, Japanese Laid-Open Patent Publication No. 2002-72214 discloses such a constitution that, in order to solve such a disadvantage that a liquid crystal display is extremely poor in viewability in well-lit rooms and outdoors due to reflection, a protection panel is formed in a combination of a λ/4 plate, a polarizing plate, and a transparent protective plate. Such arts are also disclosed that additional functions are added to the outermost surface of the protection panel by constructing the transparent protective plate as a touch panel and sticking a hard coating film or a low reflectance film thereon.

Moreover, recently, as electronic apparatuses have become fashionable in design, a decoration such as edging is made on the protection panel by printing, as disclosed for example in Japanese Laid-Open Patent Publication No. 2001-318612,
in [Patent document 1] Japanese Laid-Open Patent Publication No. 2002-72214,
in [Patent document 2] Japanese Laid-Open Patent Publication No. 2001-318612,
and in JP 2001-290005.

### [DISCLOSURE OF INVENTION]

### [Problems to be Solved by the Invention]

However, to print a decoration on the protection panel, printing has to be carried out on each of the formed protection panels after forming the protection panel. Therefore, there is such a problem that the above is disadvantageous in productivity.

Accordingly, an object of the present invention is to solve the above disadvantage and to provide a display window protection panel for an electronic apparatus, which is superior in productivity, and a manufacturing method of the protection panels.

### [Means for Solving the Problem]

To achieve the above object, according to a first aspect of the present invention, a display window protection panel for an electronic apparatus according to claim 1 is provided.

According to an embodiment of the present invention, the display window protection panel for an electronic apparatus, wherein the decorating portion is provided in a peripheral area of the decorating film as a printed layer, and the transparent window portion is formed in an central portion of the decorating film is provided.

According to an embodiment of the present invention, the display window protection panel for an electronic apparatus, wherein the decorating film is further provided with a first low reflectance processed layer is provided.

According to an embodiment of the present invention, the display window protection panel for an electronic apparatus, wherein the first low reflectance processed layer is provided to an entire of the other surface of the hard coating film is provided.

According to an embodiment of the present invention, the display window protection panel for an electronic apparatus, wherein the transparent protective plate is optical isotropic, and either surface thereof is provided with a polarizing film is provided.

According to an embodiment of the present invention, the display window protection panel for an electronic apparatus, wherein the polarizing film is provided to a surface at a transparent protective plate side not opposing to the display device is provided.

According to an embodiment of the present invention, the display window protection panel for an electronic apparatus, wherein the transparent protective plate is provided with a second low reflectance processed layer onto a surface at a side opposing to the display device is provided.

According to an embodiment of the present invention, the display window protection panel for an electronic apparatus, wherein the second low reflectance processed layer is formed of a λ/4 plate is provided.

According to an embodiment of the present invention, the display window protection panel for an electronic apparatus, wherein the transparent protective plate is constructed of a touch panel including a movable electrode film laminated on the decorating film and a fixed electrode plate stuck to the movable electrode film in the peripheral portion thereof so as to form an air layer between the movable electrode film and the fixed electrode plate is provided.

According to a second aspect of the present invention, a manufacturing method of a display window protection panel for an electronic apparatus according to claim 10 is provided.

### [Effect of the Invention]

Since the display window protection panel for an electronic apparatus according to the present invention is constructed as described above, the following effects can be obtained.

That is, in the display window protection panel for an electronic apparatus according to the present invention, since the decorating film, which is previously formed with the window-forming layer having the transparent window portion on the rear surface of the hard coating film, is stuck onto the transparent protective plate surface in a lamination state, each protection panel does not have to be printed. Moreover, by arranging as described above, when carrying out the printing on the hard coating film, which is the object to be formed with the window forming layer, since a plurality of patterns can be continuously printed using a rolled film, when manufacturing the protection panel, by sticking a large size decorating film and a large size transparent protective plate to each other and cutting them at one time, the productivity of the protection panels can be increased. Further, since the window forming layer is disposed between the hard coating film and the transparent protective plate and is not exposed to the outside, the printing on the decorating portion is not deteriorated due to the use for a long period of time. Furthermore, since the decorating portion is formed as a thin film and projections and recessions are not formed on the surface of the decorating film, such a disadvantage does not occur that, causes air bubbles to be caught between the transparent protective plate and the decorating film while sticking them to each other.

### [BRIEF DESCRIPTION OF DRAWING]

Fig. 1 is a cross-sectional view of a display window protection panel for an electronic apparatus according to an embodiment of the present invention, taken along the line I-I in Fig. 6;
Fig. 2 is a cross-sectional view of a display window protection panel for an electronic apparatus according to another embodiment of the present invention;
Fig. 3 is a cross-sectional view of a display window protection panel for an electronic apparatus according to still another embodiment of the present invention;
Fig. 4 is a cross-sectional view of a display window protection panel for an electronic apparatus according to still another embodiment of the present invention;
Fig. 5 is a cross-sectional view of a display window protection panel for an electronic apparatus according to still another embodiment of the present invention;
Fig. 6 is a view showing the external structure of the display window protection panel for an electronic apparatus according to the embodiments of the present invention;
Fig. 7 is a view showing an example use of the display window protection panel for an electronic apparatus according to the embodiments of the present invention; and
Fig. 8 is a view showing a manufacturing process of the display window protection panel for an electronic apparatus according to the embodiments of the present invention.

### [BEST MODE FOR CARRYING OUT THE INVENTION]

Before the description of the present invention proceeds, it is to be noted that like parts are designated by like reference numerals throughout the accompanying drawings. Hereinafter, the present invention will be described further in detail with reference to the drawings.

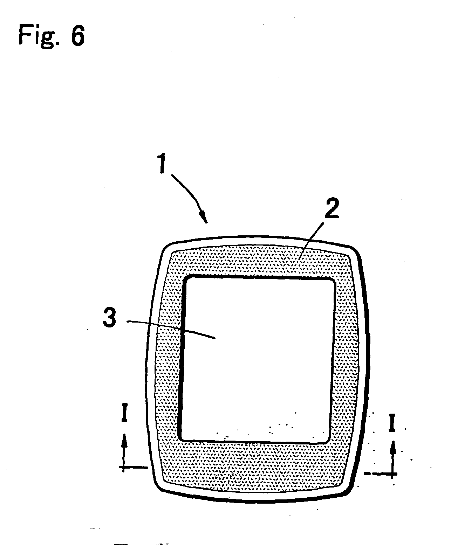

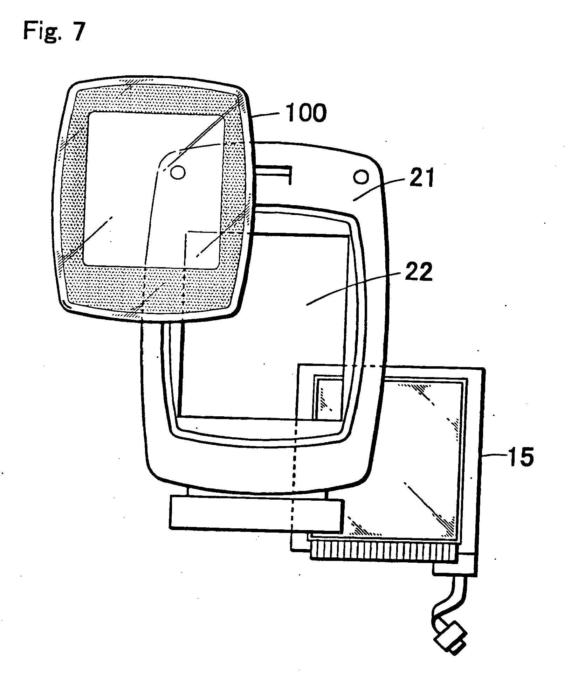

The display window protection panel for an electronic apparatus according to the present invention is a thin resin panel as shown in Fig. 6, and is provided for covering an opening for a display window of a casing of an electronic apparatus as shown in Fig. 7. That is, a front casing 21 is formed with an opening for a display window 22 for disposing a liquid crystal display device 15, or the like, the protection panel is fixed by fusion bonding, or the like to protect the surface of the mounted display device 15 below the display window opening- 22.

The display window protection panel 1 for an electronic apparatus is constructed of a decorating portion 2 and a transparent window portion 3. When the protection panel is disposed on the display window of an electronic apparatus, the liquid crystal panel 15 mounted below the protection panel 1 can be viewed through the transparent window portion 3. The decorating portion 2 is formed of a decorating film 7 including a window forming layer 6 having decorating at the periphery area of the protection panel as described later, and the part of the forming layer 6 formed with no decorating is the transparent window portion 3. Therefore, the decorating film 7 may be provided on the entire surface of the protection panel. The decorating portion 2 may be produced by sticking the decorating film 7 with the window forming layer to the surface of the transparent protective plate constituting the protection panel, and then, cutting the transparent protective plate 4 and the decorating film 7 at one time.

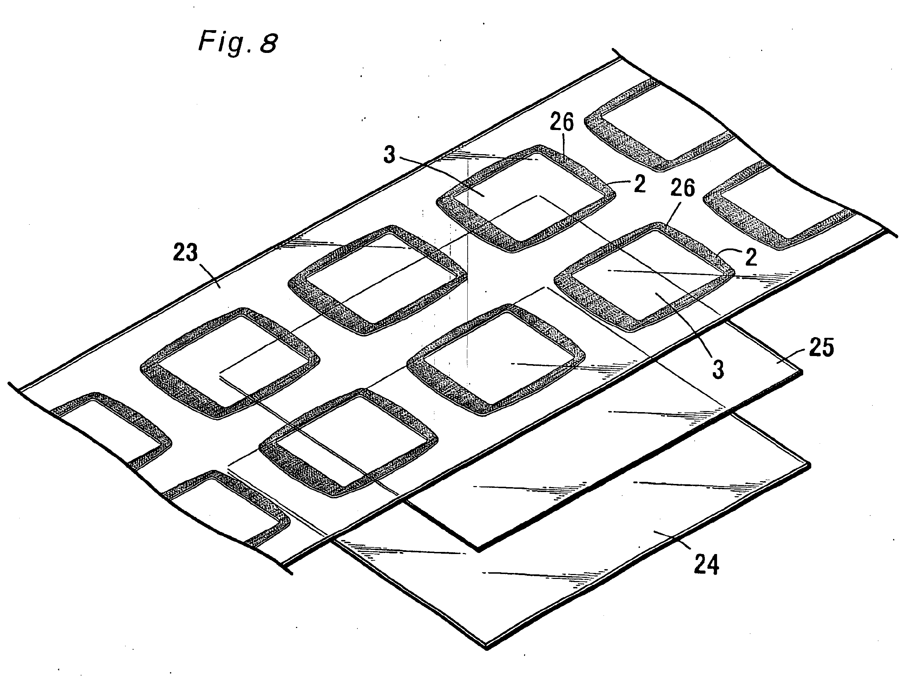

For example, as shown in Fig. 8, the protection panel may be produced by sticking a rolled decorating film 23, on which a plurality of decorating areas 26 each includes a decorating portion 2, to a large size transparent protective plate 24 using a transparent double-sided tape 25 and then cutting the stuck transparent protective plate and the decorating film at one time. The stuck large size transparent protective plate 24 and the rolled decorating film 23 are cut at one time preferably at a position outside the transparent window portion 3 and inside the decorating area 26. By arranging as described above, the protection panel in which the decorating layer 2 is formed up to the edge portion thereof can be produced.

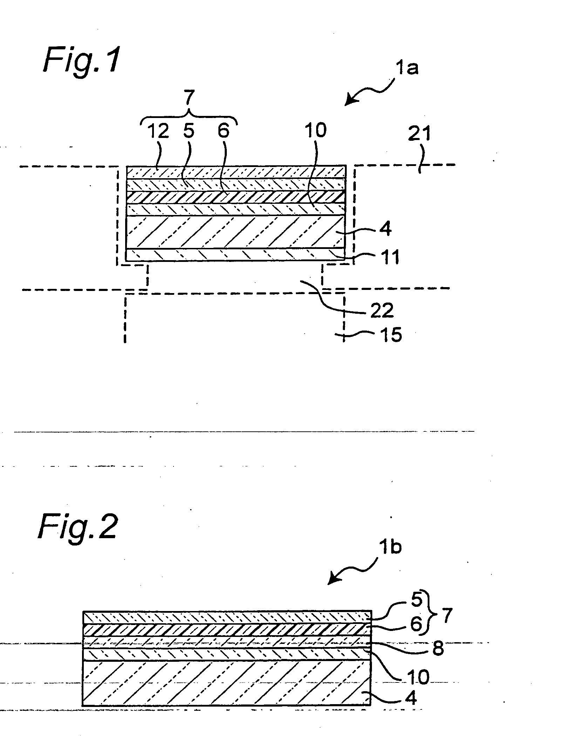

The protection panel shown in Fig. 6 has a laminated structure of the transparent protective plate 4 and the decorating film 7; and specifically has, for example, a cross-sectional structure as shown in Fig. 1.

In a protection panel 1a shown in Fig. 1, the decorating film 7 is stuck onto the surface of the transparent protective plate 4 into a laminated state by means of a sticking layer 10; and on the rear surface of the transparent protective plate 4, a second low reflectance processed layer 11 is formed. Also, in the decorating film 7, on the surface of hard coating film 5 at the transparent protective plate 4 side, the window forming layer 6 having the decorating portion 2 is formed, and on the opposite surface thereof, a first low reflectance processed layer 12 is formed.

If some kind of optical reflection can be reduced and the viewability of the display of the liquid crystal panel 15 viewed through the transparent window portion can be increased, the first and second low reflectance processed layers 12 and 11 may have any structures respectively.

For the transparent protective plate 4, a material that excels in transparency and is capable of protecting the liquid crystal panel 15 from breakeage is used. For example, general-purpose resins such as polystyrene resin, polyolefin resin, ABS resin, AS resin, acrylic resin, and AN resin, and the like are given. Moreover, the following resins may be used: general-purpose engineering resins such as polystyrene resin, polycarbonate resin, polyacetal resin, polycarbonate denatured polyphenylene ether resin, polybutylene terephthalate resin, and ultra high molecular weight polyethylene resin, and the like; or super engineering resins such as polysulfone resin, polyphenylene sulfide resin, polyphenylene oxide resin, polyarylate resin, polyetherimide resin, polyimide resin, liquid crystal polyester resin, and polyallyl heat-resistant resin, and the like.

To form the second low reflectance processed layer 11 located on the rear surface of the transparent protective plate 4, the following low reflectance processing method may be employed. For example, applying a low reflectance material using resin with low refractive index such as fluorocarbon resin or silicone resin; forming a metal multilayered film by deposition or the like; sticking a low reflectance film; or processing the surface into a satin finished surface by applying of sand blasting, embossing, matte coating, etching or the like, are employed.

As the hard coating film 5 of the decorating film 7, such a film is used that a hard coating processed layer of acrylic resin, silicone resin, UV curing resin, or the like is formed on one or both surfaces of a transparent resin film formed of an engineering plastic such as polycarbonate, polyamide, polyether keton, and the like; or acryl, polyethylene terephthalate, polybutylene terephthalate or the like. When the hard coating processed layer is formed on only one surface thereof, the surface formed with no hard coating processed layer comes to the transparent protective plate 4 side.

To form the first low reflectance processed layer 12 of the decorating film 7, in the same manner as the formation of the second low reflectance processed layer 11 provided on the rear surface of the transparent protective plate 4, the following methods may be employed: that is, applying a low reflectance material using resin with low refractive index such as fluorocarbon resin or silicone resin; forming a metal multilayered film by vapor deposition or the like; sticking a low reflectance film; or processing the surface into a satin finished surface by applying of sand blasting, embossing, matte coating, etching, or the like. The timing of forming the first low reflectance processed layer 12 may be at a point either before or after forming the window forming layer 6 on the hard coating film 5.

The decorating film 7 includes the transparent window portion and the decorating portion. In the protection panel 1 obtained by laminating the decorating film 7 on the surface of the transparent protective plate 4, a portion to be decorated is the decorating portion 2 and the portion with no decorating portion 2 is the transparent window portion 3. By forming the decorating portion 2 only in the periphery area of the decorating film so that the transparent window portion 3 is formed in the central portion thereof, the decorating portion 2 may be used, for example, also as a concealing part for electrodes part provided in the periphery area of the liquid crystal panel 15.

As the material of the decorating portion of the window forming layer 6, a coloring ink, which contains a pigment or dye of an appropriate color as the coloring agent using the following resin as the binder: polyvinyl chloride resin, polyamide resin, polyester resin, polyacrylic resin, polyurethane resin, polyvinyl acetal resin, polyester urethane resin, cellulose ester resin, alkyd resin, or the like may be employed. As the method of forming the decorating portion, gravure printing, screen printing or the like is preferably employed. Little pits and projections are -formed on the surface of the decorating film by printing to form the decorating portion in a thin film state on the window forming layer. Accordingly, when sticking the decorating film to the transparent protective plate, air bubbles are hardly formed between the transparent protective plate 4 and the decorating film 7.

The window forming layer 6 may be formed of a metal thin film layer or a combination of a printed layer and a metal thin film layer. The metal thin film layer is formed to give the window forming layer 6 a metallic luster, and may be formed by vacuum evaporation, sputtering, ion plating, plating, or the like. In this case, the following metals may be employed in accordance with the desired color of the metallic luster; i.e., metal such as aluminum, nickel, gold, platinum, chromium, iron, copper, tin, indium, silver, titanium, lead, -zinc, or, an alloy of the above, or compounds. Normally, the metal thin-film layer is formed partially. Also when the metal thin film layer is formed, a pre-anchor layer or a post-anchor layer may be formed for improving adhesion to another layer.

As the sticking layer 10, whereas a transparent double-sided tape may be preferably used, a transparent adhesive agent may be employed. The sticking layer may be provided on the entire surface of the decorating film 7. However, the sticking layer may be provided only to a portion of the window-forming layer to be provided with the decorating portion to increase the viewability of the transparent window portion.

The productivity of the protection panels is increased according to the above constructions. That is the decorating film 7 previously provides the window forming layer 6 having the decorating portion and the transparent window portion, on the rear surface of the hard coating film 5 and is laminated on the surface of the transparent protective plate 4. Therefore, the printing on each protection panel is not required. Moreover, a plurality of patterns can be continuously printed using the rolled film when providing the decorating portion on the hard coating film 5 or the transparent resin film 12 to be formed with the window layer 6. Therefore, the productivity of the protection panels can be increased.

The display window protection panel for an electronic apparatus according to the embodiment of the present invention is not limited to the above-described constitution. For example, a protection panel 1b shown in Fig. 2 is constructed by laminating a decorating film 7 on the surface of an optically isotropic transparent protective plate 4 with a polarizing plate 8 interposed therebetween (see Fig. 2). Note that, in this case, at least a window-forming layer 6, which has the decorating portion and the transparent window portion, is formed on the surface of the hard coating film 5 at the transparent protective plate 4 side. The reflected light from the liquid crystal panel 15 side can be reduced by the polarizing plate 8 disposed as described above. Also, the window-forming layer 6 is arranged so as to position in front of the polarizing plate 8 when the protection panel is mounted on an electronic apparatus. Accordingly, the viewability of the window-forming layer 6 is satisfactorily increased. Contrarily, if the window-forming layer 6 is positioned behind the polarizing plate 8, the window-forming layer 6 is viewed through the polarizing plate 8 resulting in an unsatisfactory viewability of the window-forming layer. As for the polarizing plate 8, a polarizing plate ordinarily used in the field of liquid crystal display may be employed. For example, such a uniaxial expanded film, in which a dichroic material such as iodine or a dichroic dye is absorbed and oriented in a polyvinyl alcohol resin, is suitable. Ordinarily, such a uniaxial expanded film, in which a dichroic material is absorbed and oriented, is used in a state a protective film is laminated on both surfaces thereof. When such protection panel is used, the polarizing plate provided to the liquid crystal panel 15 may be omitted.

As methods of decorating the display window protection panel of an electronic apparatus, Japanese Laid-Open Patent Publication No. 2001-318612 discloses transfer inmolding and insert molding. The methods are applicable to the decorating on the transparent protective plate 4 only. However, the methods are not applicable to the above-described constitution including the polarizing plate 8. The reason of this is the polarizing plate 8 deteriorates due to the heat when a printed sheet is inserted in a mold and then molten resin is injected thereinto. When the decorating film 7 is laminated on the transparent protective plate 4 provided with the polarizing plate 8, the polarizing plate 8 never deteriorates.

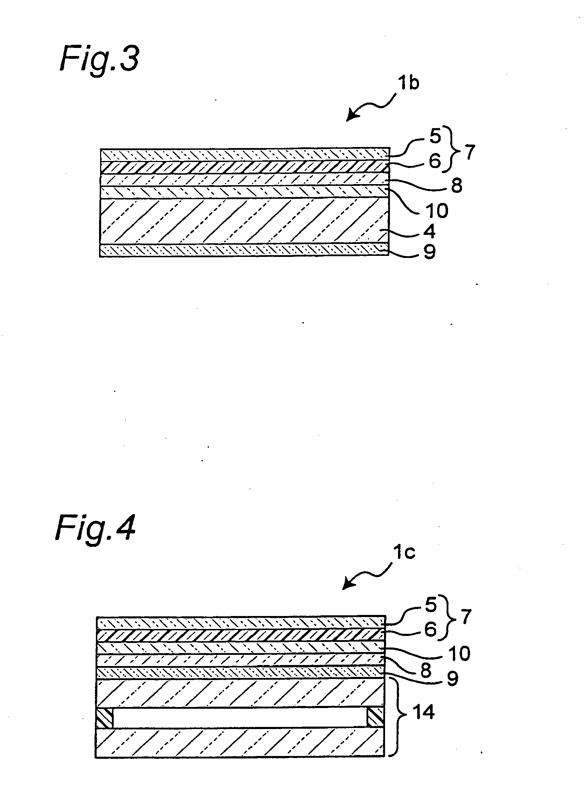

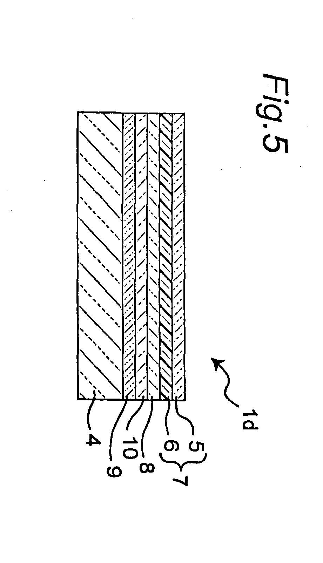

Also, in a display window protection panel 1c for an electronic apparatus according to another embodiment of the present invention, the constitution including the above-described polarizing plate 8 may be further laminated with a λ/4 plate 9 on the rear surface of the transparent protective plate 4 (see Fig. 3). The λ/4 plate 9 is a wavelength plate having a function to cause a phase difference of 1/4 wavelength in the incident ray. The λ/4 plate 9 may be disposed between the polarizing plate 8 and the transparent protective plate 4 (see Fig. 5). The λ/4 plate 9 and the polarizing plate 8 are combined so that the optical axes thereof form an angle of approximately 45° with respect to each other and constitute circular polarizing plates. The circular polarizing plate functions as an anti-reflection filter that efficiently absorbs the internal reflection due to the incident light from the outside to increase the viewability.

The λ/4 plate 9 may be constituted of a uniaxial expanded film formed from various kinds of high molecular substances which are generally adopted in field of liquid crystal display. As examples of materials, polyvinyl alcohol, norbornene resin, cellulose resin, polycarbonate, and the like are given, but not limited thereto.

Moreover, in the above-described constitutions disposed with the polarizing plate 8, the transparent protective plate 4 may be constructed of a touch panel 14 (see Fig. 4). As the touch panel, the following widely used conventional touch panel may be employed. That is, the touch panel is constructed of a decorating film 7, a laminated movable electrode film, and a fixed electrode plate, which is stuck to the movable electrode film at the peripheral portion thereof to form an air layer therebetween.

Moreover, in the display window protection panel 1 for an electronic apparatus according to present invention, the decorating film 7 may be constructed of the window forming layer 6 formed on the surface of the hard coating film 5 at the transparent protective pl-ate 4 side with a transparent resin film interposed therebetween. In this case, the window-forming layer 6 may be formed after the transparent resin film is stuck to the hard coating film 5. Or, the transparent resin film, which has been formed with the window forming layer 6 on the surface at the transparent protective plate 4 side, may be stuck to the hard coating film 5. Also, in the present invention, as the decorating film 7, such a decorating film that a transparent resin film, which has been provided with the window-forming layer 6 on the surface at the hard coating film 5 side and stuck onto the surface of the hard coating film 5 at the transparent protective plate 4 side, may be employed.

### (First working example)

Employing a single-sided hard coating film (low reflectance processed) of a PET base material of 0.075 mm in thickness, a window forming layer having a transparent window portion on the surface opposite to the hard coating surface was formed in a manner of gravure printing; thus the decorating film was prepared. Then, the decorating film was stuck to the surface of an optical isotropic transparent protective plate, which was made of acrylic plate of 1.0 mm in thickness, using a transparent double-sided tape so that the window forming layer side thereof was the rear surface, -and a low reflectance film (manufactured by NOF CORPORATION) was stuck to the rear surface of the transparent protective plate; thus the low reflectance processed layer was formed.

The protection panel was constructed that the decorating film in which the window-forming layer having the transparent window portion had been previously formed on the rear surface of the hard coating film was laminated on the surface of the transparent protective plate. Accordingly, the productivity of the protection panels was satisfactorily increased.

### (Second working example)

Employing a single-sided hard coating film of a PET base material of 0.075 mm in thickness, a window forming layer having a transparent window portion on the surface opposite to the hard coating surface was formed in a manner of gravure printing; thus the decorating film was prepared. Then, a polarizing plate (HEG1425DU manufactured by Nitto Denko Corporation), in which iodine had been absorbed and oriented in a polyvinyl alcohol resin of 0.2 min in thickness, was stuck on the surface of an optical isotropic transparent protective plate made of an acrylic plate of 1.0 mm in thickness. Then, the decorating film was stuck to the surface of the polarizing plate using a transparent double-sided tape so that the window forming layer side became the rear surface. And further, a λ/4 plate (SEF340138B manufactured by Sumitomo Chemical Co. Ltd.) made of polycarbonate resin of 40 µm in thickness was stuck to the rear surface of the transparent protective plate, thus the display window protection panel of an electronic apparatus was obtained. Assuming that, in the orientation axis of the λ/4 plate and the absorption axis of the polarizing plate, the lateral direction be 0°; and that the angle change in the counterclockwise direction, the orientation axis of the λ/4 plate was 90°, and the absorption axis of the polarizing plate 2 was 45°. The above sticking was carried out entirely using a baseless transparent adhesive of 25µm in thickness.

The protection panel was constructed that the decorating film in which the window-forming layer having the transparent window portion had been previously formed on the rear surface of the hard coating film was laminated on the surface of the transparent protective plate. Accordingly, the productivity of the protection panels was satisfactorily increased.

### (Third working example)

The third working example was similar to the second working example excepting that the transparent protective plate was a touch panel as described below. That is, an ITO film of 20 nm in thickness was entirely formed on one surface of the polycarbonate film of 0.1 mm in thickness by sputtering and peripheral portion of the ITO film was removed, thus a transparent electrode having a square shape larger in width was formed. And a circuit including bus bars, which were disposed between the two edges opposite to each other in the lateral direction of the transparent electrode, and routing circuits for outputting from the bus bars to the outside was formed using a silver paste by screen printing. Further, an acrylic plate of 0.7 mm in thickness and having the identical vertical and lateral dimensions to those of the PET film was stuck onto the surface opposite to the surface formed with the transparent electrode of polycarbonate film using a baseless transparent adhesive of 25 µm in thickness, thus a lower side electrode plate was obtained. Also, using a polycarbonate film of 125 µm in thickness, which has vertical and lateral dimensions identical to those of the lower side electrode plate, an ITO film of 20 nm in thickness was formed on the entire one surface thereof by sputtering, and then a peripheral portion of the ITO film was removed; thus the transparent electrode having a square shape larger in width was formed. Further, a circuit including bus bars, which were disposed between the two edges opposite to each other in the vertical direction of the transparent electrode, and routing circuits for outputting to the outside from the bus bars was printed using a silver paste by screen printing; thus an upper electrode was obtained. The upper side electrode plate and the lower side electrode plate were disposed being parted from the electrodes and faced to each other, and stuck to each other in the peripheral area excluding a periphery portion of a film connector using an adhesive; thus a touch panel was obtained

The protection panel was constructed that the decorating film in which the window-forming layer having the transparent window portion had been previously formed on the rear surface of the hard coating film was laminated on the surface of the transparent protective plate. Accordingly, the productivity of the protection panels was satisfactorily increased.

Effects of the respective embodiments can be obtained by appropriately combining arbitrary embodiments in the above-described embodiments.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims.

## Claims

1. A display window protection panel (1, 1a; 1b; 100) for an electronic apparatus, said panel (1, 1a; 1b; 100) being fitted over a display window opening (22) for protecting a portion of a display device (15) which is located under the display window opening (22) in a casing (21) of the electronic apparatus and which is exposed by the display window opening (22), said protection panel (1, 1a; 1b; 100) comprising:
a transparent protective plate (4) opposed to a surface of said exposed portion of said display device (15);
a decorative film (7) including a transparent hard coating film (5) and a window forming layer (6) having a decorative portion (2) formed in a thin film state in a portion of one surface of said hard coating film (5) and further having a part (3) which is not formed with said decorative portion (2) but which is formed as a transparent window portion (3) arranged so that the portion exposed by said display window opening (22) of said display device (15) can be viewed; and
a transparent sticking layer (10) for sticking said decorative film (7) in a laminated state to a surface of said transparent protective plate (4) at a side not facing towards said display device (15) so that said window forming layer (6) is positioned on a side surface of the transparent protective plate.

2. The display window protection panel for an electronic apparatus according to claim 1, wherein said decorative portion (2) is provided in a peripheral area of said decorating film (7) as a printed layer, and said transparent window portion (3) is formed in a central portion of said decorative film.

3. The display window protection panel for an electronic apparatus according to claim 1, wherein said decorative film (7) is further provided with a first low reflectance processed layer (12).

4. The display window protection panel for an electronic apparatus according to claim 3, wherein said first low reflectance processed layer (12) is provided to an entire surface of said transparent hard coating film (15).

5. The display window protection panel for an electronic apparatus according to claim 1, wherein said transparent protective plate (4) is optical isotropic, and either surface thereof is provided with a polarizing film (9).

6. The display window protection panel for an electronic apparatus according to claim 5, wherein said polarizing film (9) is provided to a surface of the transparent protective plate (4) at a side not opposing to said display device (15).

7. The display window protection panel for an electronic apparatus according to claim 5, wherein said transparent protective plate (4) is provided with a second low reflectance processed layer (12) onto a surface at a side opposing to said display device (15).

8. The display window protection panel for an electronic apparatus according to claim 7, wherein said second low reflectance processed layer (12) is formed of a λ/4 plate.

9. The display window protection panel for an electronic apparatus according to any one of claims 1 to 8, wherein the transparent protective plate (4) is constructed of a touch panel (14) including a movable electrode film laminated on said decorative film (7) and a fixed electrode plate stuck to said movable electrode film in the peripheral portion thereof so as to form an air layer between said movable electrode film and the fixed electrode plate.

10. A manufacturing method of the display window protection panel of claim 1 for an electronic apparatus, said panel (1, 1a; 1b; 100) being fitted over a display window opening (22) for protecting a portion of a display device (15) which is located under the display window opening (22) in a casing (21) of the electronic apparatus and which is exposed by the display window opening (22), the method comprising:
forming a plurality of decorative areas (26) each including a window forming layer (6) having a decorative portion (2) formed in a portion of one surface of a hard coating film (5) in a thin film state, in which a part (3) not provided with said decorative portion (2) is formed as a transparent window portion (3) which transmits a portion of said display device (15) which is exposed by said display window opening (22) so as to be viewed, thereby producing a large size decorative film (23);
sticking said large size decorative film (23) to a large size transparent protective plate (24) having an area larger than one of the decorative areas (26) so that said decorative portion (2) is located opposing to a surface of said large size transparent protective plate (24); and
cutting said stuck large size decorative film (23) and said large size transparent protective plate (24) simultaneously in a position between said transparent window portion (3) and said decorative area (26), thereby obtaining said protection panels (1, 1a; 1b; 100).

## Patentansprüche

1. Anzeigefensterschutzpanel (1, 1a, 1b; 100) für eine elektronische Vorrichtung, wobei das Panel (1, 1a, 1b; 100) über einer Anzeigefensteröffnung (22) zum Schützen eines Abschnitts einer Anzeigeeinrichtung (15) montiert ist, die unter der Anzeigefensteröffnung (22) in einem Gehäuse (21) der elektronischen Vorrichtung angeordnet ist und die durch die Anzeigefensteröffnung (22) exponiert ist, das Schutzpanel (1, 1a, 1b; 100) mit:
einer transparenten Schutzplatte (4), die einer Fläche des exponierten Abschnitts der Anzeigeeinrichtung (15) gegenüberliegt;
einer dekorativen Folie (7) einschließlich einer transparenten harten Beschichtungsfolie (5) und einer fensterausbildenden Schicht (6) mit einem dekorativen Abschnitt (2), der als Dünnfilm in einem Abschnitt einer Fläche der harten Beschichtungsfolie (5) ausgebildet ist und ferner einen Teil (3) aufweist, der nicht mit dem dekorativen Abschnitt (2) sondern als ein transparenter Fensterabschnitt (3) ausgebildet ist, der so angeordnet ist, dass der durch die Anzeigefensteröffnung (22) exponierte Abschnitt der Anzeigeeinrichtung (15) sichtbar ist; und
einer transparenten Haftschicht (10) zum Anhaften der dekorativen Folie (7) in einem laminierten Zustand an einer Fläche der transparenten Schutzplatte (4) auf einer Seite, die nicht der Anzeigeeinrichtung (15) zugewandt ist, sodass die fensterausbildende Schicht (6) auf einer Seitenfläche der transparenten Schutzplatte positioniert ist.

2. Anzeigefensterschutzpanel für eine elektronische Vorrichtung nach Anspruch 1, bei dem der dekorative Abschnitt (2) in einem Randbereich der dekorativen Folie (7) als eine gedruckte Schicht bereitgestellt ist und der transparente Fensterabschnitt (3) in einem zentralen Abschnitt der dekorativen Folie ausgebildet ist.

3. Anzeigefensterschutzpanel für eine elektronische Vorrichtung nach Anspruch 1, bei dem die dekorative Folie (7) ferner mit einer ersten verarbeiteten Schicht niedriger Reflexion (12) bereitgestellt ist.

4. Anzeigefensterschutzpanel für eine elektronische Vorrichtung nach Anspruch 3, bei dem die erste verarbeitete Schicht niedriger Reflexion (12) einer gesamten Fläche der transparenten harten Beschichtungsfolie (15) bereitgestellt ist.

5. Anzeigefensterschutzpanel für eine elektronische Vorrichtung nach Anspruch 1, bei dem die transparente Schutzplatte (4) optisch isotropisch ist und eine ihrer Flächen mit einer polarisierenden Folie (9) bereitgestellt ist.

6. Anzeigefensterschutzpanel für eine elektronische Vorrichtung nach Anspruch 5, bei dem die polarisierende Folie (9) einer Fläche der transparenten Schutzplatte (4) bei einer Seite bereitgestellt ist, die nicht der Anzeigeeinrichtung (15) gegenüberliegt.

7. Anzeigefensterschutzpanel für eine elektronische Vorrichtung nach Anspruch 5, bei dem die transparente Schutzplatte (4) mit einer zweiten verarbeiteten Schicht niedriger Reflexion (12) auf einer Fläche bei einer Seite bereitgestellt ist, die der Anzeigeeinrichtung (15) gegenüberliegt.

8. Anzeigefensterschutzpanel für eine elektronische Vorrichtung nach Anspruch 7, bei dem die zweite verarbeitete Schicht niedriger Reflexion (12) aus einer λ/4-Platte ausgebildet ist.

9. Anzeigefensterschutzpanel für eine elektronische Vorrichtung nach einem der Ansprüche 1 bis 8, bei dem die transparente Schutzplatte (4) mit einem Touchpanel (14) einschließlich einer bewegbaren Elektrodenfolie, die auf die dekorative Folie (7) laminiert ist, und einer befestigten Elektrodenplatte ausgeführt ist, die an der bewegbaren Elektrodenfolie in deren Randabschnitt anhaftet, um eine Luftschicht zwischen der bewegbaren Elektrodenfolie und der befestigten Elektrodenplatte auszubilden.

10. Herstellungsverfahren des Anzeigefensterschutzpanels (1, 1a, 1b; 100) nach Anspruch 1 für eine elektronische Vorrichtung, wobei das Panel (1, 1a, 1b; 100) über einer Anzeigefensteröffnung (22) zum Schützen eines Abschnitts der Anzeigeeinrichtung (15) montiert ist, der unter der Anzeigefensteröffnung (22) in einem Gehäuse (21) der elektronischen Vorrichtung angeordnet ist und der durch die Anzeigefensteröffnung (22) exponiert ist, das Verfahren umfassend:
Ausbilden einer Vielzahl von dekorativen Bereichen (26), wobei jeder einer fensterausbildende Schicht (6) mit einem dekorativen Abschnitt (2) aufweist, der in einem Abschnitt einer Fläche einer harten Beschichtungsfolie (5) als Dünnfilm ausgebildet ist, in dem ein Teil (3), der nicht mit dem dekorativen Abschnitt (2) bereitgestellt ist, als transparenter Fensterabschnitt (3) ausgebildet ist, der einen Abschnitt der Anzeigeeinrichtung (15) überträgt, welcher durch die Anzeigefensteröffnung (22) exponiert ist, sodass er sichtbar ist, dadurch eine dekorative Folie (23) großer Größe herstellend;
Anhaften der dekorativen Folie großer Größe (23) an eine transparente Schutzplatte großer Größe (24), die einen Bereich aufweist, der größer ist als einer der dekorativen Bereiche (26), sodass der dekorative Abschnitt (2) gegenüberliegend zu einer Fläche der transparenten Schutzplatte großer Größe (24) angeordnet ist; und
gleichzeitiges Schneiden der angehafteten dekorativen Folie großer Größe (23) und der transparenten Schutzplatte großer Größe (24) bei einer Position zwischen dem transparenten Fensterabschnitt (3) und dem dekorativen Bereich (26), wodurch das Schutzpanel (1, 1a, 1b; 100) erhalten wird.

## Revendications

1. Panneau de protection de fenêtre d'affichage (1, 1a, 1b ; 100) pour un appareil électronique, ledit panneau (1, 1a, 1b ; 100) étant monté sur une ouverture de fenêtre d'affichage (22) pour protéger une partie d'un dispositif d'affichage (15) qui est située sous l'ouverture de fenêtre d'affichage (22) dans un boîtier (21) de l'appareil électronique et qui est exposée par l'ouverture de fenêtre d'affichage (22), ledit panneau de protection (1, la, 1b ; 100) comprenant :
une plaque de protection transparente (4) opposée à une surface de ladite partie exposée dudit dispositif d'affichage (15) ;
un film décoratif (7) comprenant un film de revêtement dur transparent (5) et une couche de formation de fenêtre (6) ayant une partie décorative (2) formée dans un état de film fin dans une partie d'une surface dudit film de revêtement dur (5) et ayant en outre une partie (3) qui n'est pas formée avec ladite partie décorative (2) mais qui est formée comme une partie de fenêtre transparente (3) agencée de sorte que la partie exposée par ladite ouverture de fenêtre d'affichage (22) dudit dispositif d'affichage (45) peut être vue ; et
une couche adhésive transparente (10) pour coller ledit film décoratif (7) dans un état stratifié sur une surface de ladite plaque de protection transparente (4) au niveau d'un côté qui n'est pas orienté vers ledit dispositif d'affichage (15), de sorte que ladite couche de formation de fenêtre (6) est positionnée sur une surface latérale de la plaque de protection transparente.

2. Panneau de protection de fenêtre d'affichage pour un appareil électronique selon la revendication 1, dans lequel ladite partie décorative (2) est prévue dans une zone périphérique dudit film décoratif (7) sous forme d'une couche imprimée, et ladite partie de fenêtre transparente (3) est formée dans une partie centrale dudit film décoratif.

3. Panneau de protection de fenêtre d'affichage pour un appareil électronique selon la revendication 1, dans lequel ledit film décoratif (7) est en outre prévu avec une première couche traitée à faible coefficient de réflexion (12).

4. Panneau de protection de fenêtre d'affichage pour un appareil électronique selon la revendication 3, dans lequel ladite première couche traitée à faible coefficient de réflexion (12) est prévue sur toute une surface dudit film de revêtement dur transparent (15).

5. Panneau de protection de fenêtre d'affichage pour un appareil électronique selon la revendication 1, dans lequel ladite plaque de protection transparente (4) est isotrope du point de vue optique et chacune de ses surfaces est prévue avec un film polarisant (9).

6. Panneau de protection de fenêtre d'affichage pour un appareil électronique selon la revendication 5, dans lequel ledit film polarisant (9) est prévu sur une surface de la plaque de protection transparente (4) au niveau d'un côté non opposé audit dispositif d'affichage (15).

7. Panneau de protection de fenêtre d'affichage pour un appareil électronique selon la revendication 5, dans lequel ladite plaque de protection transparente (4) est prévue avec une seconde couche traitée à faible coefficient de réflexion (12) sur une surface au niveau d'un côté opposé audit dispositif d'affichage (15).

8. Panneau de protection de fenêtre d'affichage pour un appareil électronique selon la revendication 7, dans lequel ladite seconde couche traitée à faible coefficient de réflexion (12) est formée avec une plaque λ/4.

9. Panneau de protection de fenêtre d'affichage pour un appareil électronique selon l'une quelconque des revendications 1 à 8, dans lequel la plaque de protection transparente (4) est construite avec un panneau tactile (14) comprenant un film d'électrode mobile déposé en couche sur ledit film décoratif (7) et une plaque d'électrode fixe collée sur ledit film d'électrode mobile dans sa partie périphérique afin de former une couche d'air entre ledit film d'électrode mobile et la plaque d'électrode fixe.

10. Procédé de fabrication du panneau de protection de fenêtre d'affichage (1, 1a, 1b ; 100) selon la revendication 1 pour un appareil électronique ; ledit panneau (1, 1a, 1b ; 100) étant monté sur une ouverture de fenêtre d'affichage (22) pour protéger une partie d'un dispositif d'affichage (15) qui est située sous l'ouverture de fenêtre d'affichage (22) dans un boîtier (21) de l'appareil électronique et qui est exposée par l'ouverture de fenêtre d'affichage (22), le procédé comprenant les étapes consistant à :
former une pluralité de zones décoratives (26) comprenant chacune une couche de formation de fenêtre (6) ayant une partie décorative (2) formée dans une partie d'une surface d'un film de revêtement dur (5) dans un état de film fin, dans lequel une partie (3) non dotée de ladite partie décorative (2) est formée sous forme d'une partie de fenêtre transparente (3) qui transmet une partie dudit dispositif d'affichage (15) qui est exposée par ladite ouverture de fenêtre d'affichage (22) afin d'être vue, produisant ainsi un film décoratif de grande taille (23) ;
coller ledit film décoratif de grande taille (23) sur une plaque de protection transparente de grande taille (24) ayant une surface plus grande que celle des zones décoratives (26) de sorte que ladite partie décorative (2) est située à l'opposé d'une surface de ladite plaque de protection transparente de grande taille (24) ; et
couper ledit film décoratif de grande taille (23) collé et ladite plaque de protection transparente de grande taille (24) simultanément dans une position entre ladite partie de fenêtre transparente (3) et ladite zone décorative (26), obtenant ainsi lesdits panneaux de protection (1, la, 1b ; 100).
